# EUROPEAN PATENT APPLICATION

(11) **EP 4 478 774 A1**
(43) Date of publication of application: **18.12.2024**
(21) Application number: 23762808.6
(22) Date of filing: 23.02.2023
(51) Int. Cl.: H04W 24/02

(54) **COMMUNICATION METHOD AND COMMUNICATION DEVICE**

(30) Priority: 01.03.2022 CN 202210197564; 07.03.2022 CN 202210217458
(71) Applicant: Huawei Technologies Co., Ltd., Shenzhen, Guangdong 518129 (CN)
(72) Inventor: DU, Rui, Shenzhen, Guangdong 518129 (CN); LIU, Chenchen, Shenzhen, Guangdong 518129 (CN); HU, Mengshi, Shenzhen, Guangdong 518129 (CN); NAREN, Gerile, Shenzhen, Guangdong 518129 (CN); HAN, Xiao, Shenzhen, Guangdong 518129 (CN); YANG, Xun, Shenzhen, Guangdong 518129 (CN)
(74) Representative: Körber, Martin Hans
(86) International application number: PCT/CN2023/077858
(87) International publication number: WO 2023/165408

(57) **Abstract**

Embodiments of this application provide an information indication method and a communication apparatus. The method is applied to a wireless local area network system that supports various IEEE 802.11 protocols such as the 802. 1 1bf series protocols. The method includes: generating a PPDU, where the PPDU includes sensing indication information, the sensing indication information indicates that the PPDU is a PPDU used for sensing measurement, and the PPDU is a directional multi-gigabit DMG single carrier mode PPDU, an enhanced directional multi-gigabit EDMG single carrier mode PPDU, or an EDMG orthogonal frequency division multiplexing mode PPDU; and sending the PPDU. In this manner, a sensing PPDU and a non-sensing PPDU in a communication system can be distinguished, so that a receive end optimizes sensing performance.

## Description

This application claims priority to Chinese Patent Application No. 202210197564.3, filed on March 1, 2022 and entitled "INFORMATION INDICATION METHOD AND COMMUNICATION APPARATUS", which is incorporated herein by reference in its entirety.

This application claims priority to Chinese Patent Application No. 202210217458.7, filed on March 7, 2022 and entitled "INFORMATION INDICATION METHOD AND COMMUNICATION APPARATUS", which is incorporated herein by reference in its entirety.

### TECHNICAL FIELD

Embodiments of this application relate to the communication field, and more specifically, to an information indication method and a communication apparatus.

### BACKGROUND

A signal sent by a wireless fidelity (wireless fidelity, Wi-Fi) system device is generally received by another device after being reflected, diffracted, and scattered by various obstacles. Therefore, a signal received by the another device is usually obtained by superimposing a plurality of signals. This facilitates a radio signal to sense a physical environment that the radio signal passes through. In addition, a sensing (sensing) technology is derived from this.

In the sensing technology, a sensing transmit end sends a physical layer protocol data unit (physical protocol data unit, PPDU) used for sensing measurement in a sensing process, that is, a sensing PPDU. A sensing receive end receives the sensing PPDU and performs sensing measurement in the sensing process.

For a device in a communication system, how to determine that a received PPDU is a sensing PPDU is an urgent problem to be resolved.

### SUMMARY

Embodiments of this application provide an information indication method and a communication apparatus, to distinguish between a sensing PPDU and a non-sensing PPDU in a communication system.

According to a first aspect, an information indication method is provided. The method may be performed by a transmit end device, or may be performed via a chip or a circuit configured in the transmit end device. This is not limited in this application.

The method includes: generating a PPDU, where the PPDU includes sensing indication information, the sensing indication information indicates that the PPDU is a PPDU used for sensing measurement, and the PPDU is a directional multi-gigabit (directional multi-gigabit, DMG) single carrier (single carrier, SC) mode PPDU, an enhanced directional multi-gigabit (enhanced directional multi-gigabit, EDMG) single carrier mode PPDU, or an EDMG orthogonal frequency division multiplexing (orthogonal frequency division multiplexing, OFDM) mode PPDU; and sending the PPDU.

According to the solution in this embodiment of this application, a PPDU generated by a transmit end includes sensing indication information, and the sensing indication information may indicate that the PPDU is a PPDU used for sensing measurement. A receive end may determine, based on the sensing indication information, that the PPDU is the PPDU used for sensing measurement. The receive end does not determine a PPDU that does not include the sensing indication information as the sensing PPDU. In this manner, the sensing PPDU and a non-sensing PPDU in a communication system can be distinguished.

In addition, after it is determined that the PPDU is the PPDU used for sensing measurement, the receive end does not need to listen to a channel. This helps use communication resources more properly.

With reference to the first aspect, in some implementations of the first aspect, the PPDU is the DMG single carrier mode PPDU, the DMG single carrier mode PPDU includes a DMG header field, and an additional PPDU (additional PPDU, A-PPDU) indication field and a training length indication field in the DMG header (header) field carry the sensing indication information.

Therefore, in this embodiment of this application, a current indication field may be reused, and an indication of the sensing PPDU is implemented without introducing a new indication field, thereby helping save resources.

In addition, the solution in this application may be compatible with a current protocol, and have better scalability.

With reference to the first aspect, in some implementations of the first aspect, the additional PPDU indication field is a B30 field in the DMG header field, and the training length indication field is a B32 field to a B36 field in the DMG header field.

With reference to the first aspect, in some implementations of the first aspect, the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and an additional PPDU indication field in the L-header field carries the sensing indication information.

Therefore, in this embodiment of this application, a current indication field may be reused, and an indication of the sensing PPDU is implemented without introducing a new indication field, thereby helping save resources.

In addition, for both the DMG PPDU and the EDMG PPDU, the A-PPDU indication field in the DMG header is used, so that sensing indication fields in the DMG PPDU and the EDMG PPDU can be unified, thereby reducing implementation complexity.

With reference to the first aspect, in some implementations of the first aspect, the additional PPDU indication field is a B30 field in the L-header field.

With reference to the first aspect, in some implementations of the first aspect, the EDMG single carrier mode PPDU or the EDMG orthogonal frequency division multiplexing mode PPDU includes an EDMG-header-A field, and a DMG training indication field in the EDMG-header-A field indicates that the PPDU includes a DMG training field or the PPDU includes an EDMG training field.

With reference to the first aspect, in some implementations of the first aspect, the DMG training indication field is a B101 field in the EDMG-header-A field.

With reference to the first aspect, in some implementations of the first aspect, the EDMG single carrier mode PPDU or the EDMG orthogonal frequency division multiplexing mode PPDU includes the DMG training field, and a training length indication field in the L-header field indicates a length of the DMG training field.

With reference to the first aspect, in some implementations of the first aspect, the training length indication field is a B32 field to a B36 field in the L-header field.

With reference to the first aspect, in some implementations of the first aspect, the EDMG single carrier mode PPDU or the EDMG orthogonal frequency division multiplexing mode PPDU includes the EDMG training field, and an EDMG training length indication field in the EDMG-header-A field indicates a length of the EDMG training field.

With reference to the first aspect, in some implementations of the first aspect, the EDMG training length indication field is a B64 field to a B71 field in the EDMG-header-A field.

With reference to the first aspect, in some implementations of the first aspect, the PPDU is the DMG single carrier mode PPDU, the DMG single carrier mode PPDU includes a DMG header field, and a B47 field in the DMG header field carries the sensing indication information; the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and a B47 field in the L-header field carries the sensing indication information; or the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an EDMG-header-A field, and the EDMG-header-A field carries the sensing indication information.

Therefore, in this embodiment of this application, a dedicated bit may be used as the sensing indication field of the DMG PPDU or the EDMG PPDU, so that implementation is simpler.

With reference to the first aspect, in some implementations of the first aspect, the PPDU is the EDMG single carrier mode PPDU or the EDMG orthogonal frequency division multiplexing mode PPDU, and an additional EDMG PPDU indication field and an EDMG training length indication field in the EDMG-header-A field carry the sensing indication information.

With reference to the first aspect, in some implementations of the first aspect, the additional EDMG PPDU indication field is a B95 field in the EDMG-header-A field, and the EDMG training length indication field is a B64 field to a B71 field in the EDMG-header-A field.

Therefore, in this embodiment of this application, a current indication field may be reused, and an indication of the sensing PPDU is implemented without introducing a new indication field, thereby helping save resources.

According to a second aspect, an information indication method is provided. The method may be performed by a receive end device, or may be performed via a chip or a circuit configured in the receive end device. This is not limited in this application.

The method includes: receiving a PPDU, where the PPDU includes sensing indication information, the sensing indication information indicates that the PPDU is a PPDU used for sensing measurement, and the PPDU is a directional multi-gigabit DMG single carrier mode PPDU, an enhanced directional multi-gigabit EDMG single carrier mode PPDU, or an EDMG orthogonal frequency division multiplexing mode PPDU; and determining, based on the sensing indication information, that the PPDU is the PPDU used for sensing measurement.

According to the solution in this embodiment of this application, a PPDU generated by a transmit end includes sensing indication information, and the sensing indication information may indicate that the PPDU is a PPDU used for sensing measurement. A receive end may determine, based on the sensing indication information, that the PPDU is the PPDU used for sensing measurement. The receive end does not determine a PPDU that does not include the sensing indication information as the sensing PPDU. In this manner, the sensing PPDU and a non-sensing PPDU in a communication system can be distinguished.

In addition, after it is determined that the PPDU is the PPDU used for sensing measurement, the receive end does not need to listen to a channel. This helps use communication resources more properly.

With reference to the second aspect, in some implementations of the second aspect, the PPDU is the DMG single carrier mode PPDU, the DMG single carrier mode PPDU includes a DMG header field, and an additional PPDU indication field and a training length indication field in the DMG header field carry the sensing indication information.

Therefore, in this embodiment of this application, a current indication field may be reused, and an indication of the sensing PPDU is implemented without introducing a new indication field, thereby helping save resources.

In addition, the solution in this application may be compatible with a current protocol, and have better scalability.

With reference to the second aspect, in some implementations of the second aspect, the additional PPDU indication field is a B30 field in the DMG header field, and the training length indication field is a B32 field to a B36 field in the DMG header field.

With reference to the second aspect, in some implementations of the second aspect, the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and an additional PPDU indication field in the L-header field carries the sensing indication information.

Therefore, in this embodiment of this application, a current indication field may be reused, and an indication of the sensing PPDU is implemented without introducing a new indication field, thereby helping save resources.

In addition, for both the DMG PPDU and the EDMG PPDU, the A-PPDU indication field in the DMG header is used, so that sensing indication fields in the DMG PPDU and the EDMG PPDU can be unified, thereby reducing implementation complexity.

With reference to the second aspect, in some implementations of the second aspect, the additional PPDU indication field is a B30 field in the L-header field.

With reference to the second aspect, in some implementations of the second aspect, the EDMG single carrier mode PPDU or the EDMG orthogonal frequency division multiplexing mode PPDU includes an EDMG-header-A field, and a DMG training indication field in the EDMG-header-A field indicates that the PPDU includes a DMG training field or the PPDU includes an EDMG training field.

With reference to the second aspect, in some implementations of the second aspect, the DMG training indication field is a B101 field in the EDMG-header-A field.

With reference to the second aspect, in some implementations of the second aspect, the EDMG single carrier mode PPDU or the EDMG orthogonal frequency division multiplexing mode PPDU includes the DMG training field, and a training length indication field in the L-header field indicates a length of the DMG training field.

With reference to the second aspect, in some implementations of the second aspect, the training length indication field is a B32 field to a B36 field in the L-header field.

With reference to the second aspect, in some implementations of the second aspect, the EDMG single carrier mode PPDU or the EDMG orthogonal frequency division multiplexing mode PPDU includes the EDMG training field, and an EDMG training length indication field in the EDMG-header-A field indicates a length of the EDMG training field.

With reference to the second aspect, in some implementations of the second aspect, the EDMG training length indication field is a B64 field to a B71 field in the EDMG-header-A field.

With reference to the second aspect, in some implementations of the second aspect, the PPDU is the DMG single carrier mode PPDU, the DMG single carrier mode PPDU includes a DMG header field, and a B47 field in the DMG header field carries the sensing indication information; the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and a B47 field in the L-header field carries the sensing indication information; or the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an EDMG-header-A field, and the EDMG-header-A field carries the sensing indication information.

Therefore, in this embodiment of this application, a dedicated bit may be used as the sensing indication field of the DMG PPDU or the EDMG PPDU, so that implementation is simpler.

With reference to the second aspect, in some implementations of the second aspect, the PPDU is the EDMG single carrier mode PPDU or the EDMG orthogonal frequency division multiplexing mode PPDU, and an additional EDMG PPDU indication field and an EDMG training length indication field in the EDMG-header-A field carry the sensing indication information.

With reference to the second aspect, in some implementations of the second aspect, the additional EDMG PPDU indication field is a B95 field in the EDMG-header-A field, and the EDMG training length indication field is a B64 field to a B71 field in the EDMG-header-A field.

Therefore, in this embodiment of this application, a current indication field may be reused, and an indication of the sensing PPDU is implemented without introducing a new indication field, thereby helping save resources.

According to a third aspect, a communication apparatus is provided. The apparatus is configured to perform the method provided in the first aspect. Specifically, the communication apparatus may include units and/or modules configured to perform the method provided in any one of the first aspect or the foregoing implementations of the first aspect, for example, a processing unit and/or a communication unit.

In an implementation, the communication apparatus is a transmit end device. When the communication apparatus is the transmit end device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in the transmit end device. When the communication apparatus is the chip, the chip system, or the circuit in the transmit end device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus is configured to perform the method provided in the second aspect. Specifically, the communication apparatus may include units and/or modules configured to perform the method provided in any one of the second aspect or the foregoing implementations of the second aspect, for example, a processing unit and/or a communication unit.

In an implementation, the communication apparatus is a receive end device. When the communication apparatus is the receive end device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in the receive end device. When the communication apparatus is the chip, the chip system, or the circuit in the terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fifth aspect, a communication apparatus is provided, including a processor, and optionally, further including a memory. The processor is configured to control a transceiver to receive and receive a signal, the memory is configured to store a computer program, and the processor is configured to: invoke the computer program from the memory, and run the computer program, so that a sending device performs the method in any one of the first aspect or the possible implementations of the first aspect.

Optionally, there are one or more processors, and there are one or more memories.

Optionally, the memory may be integrated with the processor, or the memory and the processor are separately disposed.

Optionally, the sending device further includes a transceiver, and the transceiver may be specifically a transmitter (transmitter) and a receiver (receiver).

According to a sixth aspect, a communication apparatus is provided, including a processor, and optionally, further including a memory. The processor is configured to control a transceiver to receive and receive a signal, the memory is configured to store a computer program, and the processor is configured to: invoke the computer program from the memory, and run the computer program, so that a receiving device performs the method in any one of the second aspect or the possible implementations of the second aspect.

Optionally, there are one or more processors, and there are one or more memories.

Optionally, the memory may be integrated with the processor, or the memory and the processor are separately disposed.

Optionally, the receiving device further includes a transceiver, and the transceiver may be specifically a transmitter (transmitter) and a receiver (receiver).

According to a seventh aspect, a communication system is provided, including: a sending device, configured to perform the method in any one of the first aspect or the possible implementations of the first aspect; and a receiving device, configured to perform the method in any one of the second aspect or the possible implementations of the second aspect.

According to an eighth aspect, a computer-readable storage medium is provided. The computer-readable storage medium stores a computer program or code. When the computer program or code is run on a computer, the computer is enabled to perform the method in any one of the first aspect or the possible implementations of the first aspect; and or the method in any one of the second aspect or the possible implementations of the second aspect.

According to a ninth aspect, a chip is provided, including at least one processor. The at least one processor is coupled to a memory, the memory is configured to store a computer program, and the processor is configured to: invoke the computer program from the memory, and run the computer program, so that a sending device installed with the chip system performs the method in any one of the first aspect or the possible implementations of the first aspect, and a receiving device installed with the chip system performs the method in any one of the second aspect or the possible implementations of the second aspect.

The chip may include an input circuit or interface configured to send information or data, and an output circuit or interface configured to receive information or data.

According to a tenth aspect, a computer program product is provided. The computer program product includes computer program code. When the computer program code is run by a sending device, the method in any one of the first aspect or the possible implementations of the first aspect is performed, and when the computer program code is run by a receiving device, the method in any one of the second aspect or the possible implementations of the second aspect is performed.

### BRIEF DESCRIPTION OF DRAWINGS

FIG. 1 is a schematic diagram of a communication system to which an embodiment of this application is applicable;
FIG. 2 is a schematic flowchart of an information indication method 200 according to an embodiment of this application;
FIG. 3 is a schematic diagram of a format of a DMG SC mode PPDU;
FIG. 4 is a schematic diagram of a format of an EDMG SC mode PPDU;
FIG. 5 is a schematic diagram of a communication apparatus according to an embodiment of this application;
FIG. 6 is another schematic diagram of a communication apparatus according to an embodiment of this application; and
FIG. 7 is another schematic diagram of a communication apparatus according to an embodiment of this application.

### DESCRIPTION OF EMBODIMENTS

The following describes technical solutions of this application with reference to accompanying drawings.

The technical solutions provided in embodiments of this application may be applied to a wireless local area network (wireless local area network, WLAN) scenario. For example, the technical solutions provided in embodiments of this application may be applied to an IEEE 802.11 system standard, for example, the 802.11a/b/g standard, the 802.11bf standard, the 802.11 ad standard, the 802. 1 1ay standard, or a further next-generation standard. The 802.11bf includes two major categories of standards: a low frequency (sub7 GHz) and a high frequency (60 GHz). An implementation of sub7 GHz mainly depends on standards such as the 802.11ac, the 802.11ax, the 802.11be, and the next generation. An implementation of 60 GHz mainly depends on standards such as the 802.11ad, the 802.11 ay, and the next generation. The 802.11 ad may also be referred to as a directional multi-gigabit (directional multi-gigabit, DMG) standard, and the 802.11ay may also be referred to as an enhanced directional multi-gigabit (enhanced directional multi-gigabit, EDMG) standard. The technical solutions in embodiments of this application mainly focus on implementation of the 802.11bf on a high frequency (the 802.11ad, the 802. 11ay), but a related technical principle may be extended to a low frequency (the 802.11ac, the 802.11ax, and the 802.11be).

Although embodiments of this application are mainly described by using an example in which a WLAN network is deployed, especially a network to which the IEEE 802.11 system standard is applied, a person skilled in the art easily understands that various aspects in embodiments of this application may be extended to other networks that use various standards or protocols, for example, Bluetooth (Bluetooth), a high performance radio local area network (high performance radio local area network, HIPERLAN), a wide area network (wide area network, WAN), a personal area network (personal area network, PAN), and other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi), a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, and a wireless local area network system, for example, an internet of things (internet of things, IoT) network or an internet of vehicles (vehicle to X, V2X).

The communication system to which this application is applicable is merely an example for description, and the communication system to which this application is applicable is not limited thereto. This is collectively described herein. Details are not described below again.

A terminal in embodiments of this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future 6G network, a terminal device in a public land mobile network (public land mobile network, PLMN), or the like. This is not limited in embodiments of this application.

A network device in embodiments of this application may be a device configured to communicate with the terminal. The network device may be a base transceiver station (base transceiver station, BTS) in the global system for mobile communications (global system for mobile communications, GSM) or the code division multiple access (code division multiple access, CDMA) system, or may be a NodeB (NodeB, NB) in the wideband code division multiple access (wideband code division multiple access, WCDMA) system, or may be an evolved NodeB (evolved NodeB, eNB or eNodeB) in the LTE system, or may be a radio controller in a scenario of a cloud radio access network (cloud radio access network, CRAN). Alternatively, the network device may be a relay station, an access point, a vehicle-mounted device, a wearable device, a network device in the 5G network, a network device in the future 6G network, a network device in the PLMN network, or the like. This is not limited in embodiments of this application.

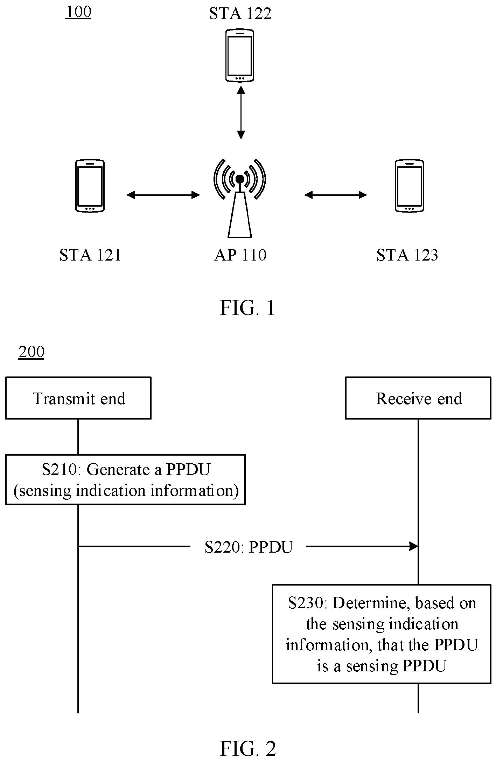

FIG. 1 is a schematic diagram of an application scenario according to this application. In FIG. 1, an AP (AP 110 shown in FIG. 1) may be a communication server, a router, or a switch, or may be any one of the foregoing network devices. A STA (STA 121 or STA 122 shown in FIG. 1) may be a mobile phone or a computer, or may be any one of the foregoing terminals. This is not limited in this embodiment of this application. One or more STAs in a station device may communicate with one or more APs in an access point device after establishing an association relationship. For example, the AP 110 may communicate with the STA 121 after an association relationship is established between the AP 110 and the STA 121, and the AP 110 may communicate with the STA 122 after an association relationship is established between the AP 110 and the STA 122.

It should be understood that the communication system 100 in FIG. 1 is merely an example. The technical solutions in embodiments of this application are applicable to communication between an AP and one or more STAs, are also applicable to mutual communication between APs, and are further applicable to mutual communication between STAs.

The access point may be an access point used by a terminal (such as a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge that connects the wired network and a wireless network. A main function of the access point is to connect various wireless network clients together and then connect the wireless network to the Ethernet. Specifically, the access point may be a terminal device (for example, a mobile phone) or a network device (for example, a router) with a Wi-Fi chip. Optionally, the access point may be a device that supports a WLAN standard of the 802.11 series standards. For example, the access point may support the 802.1 1bf standard, the 802. 1 1ad standard, the 802.1 1ay standard, or a future Wi-Fi standard.

The station may be a wireless communication chip, a wireless sensor, a wireless communication terminal, or the like, and may also be referred to as a user. For example, the station may be a mobile phone, a tablet computer, a set-top box, a smart television, a smart wearable device, a vehicle-mounted communication device, a computer, or the like that supports a Wi-Fi communication function. Optionally, the station may be a device that supports a WLAN standard of the 802.11 series standards. For example, the station may also support the 802.11bf standard, the 802.11ad standard, the 802.11ay standard, or a future Wi-Fi standard.

For example, the access point and the station may be devices used in the internet of vehicles, internet of things nodes, sensors, or the like in the internet of things (internet of things, IoT), smart cameras, smart remote controls, smart water or electricity meters, or the like in a smart home, sensors in a smart city, and the like.

A wireless communication system provided in embodiments of this application may be a WLAN or a cellular network. The method may be implemented by a communication device in the wireless communication system or a chip or a processor in the communication device. The communication device may be a wireless communication device that supports parallel transmission on a plurality of links. For example, the communication device is referred to as a multi-link device (multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may operate on one link. The affiliated station may be an AP or a non-AP STA. A multi-link device whose affiliated station is an AP may be referred to as a multi-link AP, a multi-link AP device, or an AP multi-link device (AP multi-link device). A multi-link device whose affiliated station is a non-AP STA may be referred to as a multi-link STA, a multi-link STA device, or a STAmulti-link device (STAmulti-link device).

A signal sent by a Wi-Fi device is usually received by a terminal device after being reflected, diffracted, and scattered by various obstacles. This phenomenon makes an actually received signal usually obtained by superimposing a plurality of signals, that is, a channel environment may become complex. However, this facilitates the radio signal to sense a physical environment that the radio signal passes through. An ambient environment can be inferred and sensed by analyzing radio signals affected by various obstacles such as channel state information (channel state information, CSI). A sensing (sensing) technology is derived from this.

The sensing technology includes four roles and four steps. The four roles are a sensing initiator (sensing initiator), a sensing responder (sensing responder), a sensing transmitter (sensing transmitter), and a sensing receiver (sensing receiver).

Specifically, the sensing initiator is a station that initiates a sensing process. The sensing responder is a station that participates in the sensing process initiated by the sensing initiator. The sensing transmitter is a station that sends a physical layer protocol data unit (physical protocol data unit, PPDU) for sensing measurement in the sensing process, where the PPDU for sensing measurement is referred to as a sensing PPDU for short. The sensing receiver is a station that receives the sensing PPDU sent by the sensing transmitter and performs sensing measurement in the sensing process.

One of sensing technologies is radar sensing, and the radar sensing typically features self-sending and self-receiving. An annex (annex) of the standard 802.11 ay provides a method for implementing radar sensing according to the standard 802.11ad and the standard 802.11ay. A station (for example, a station #1) may implement radar sensing in the following manner.
(1) A PPDU used for sensing measurement, that is, a sensing PPDU, is generated according to a DMG standard or an EDMG standard. Both a transmitter address (transmitter address, TA) and a receiver address (receiver address, RA) in the sensing PPDU are set to a media access control (media access control, MAC) address of the station #1. If the sensing PPDU is a short (short) sector sweep (sector sweep, SSW) PPDU, a source (source) associated identifier (associated identifier, AID) and a destination (destination) associated identifier in the PPDU need to be set to a same value.
(2) The sensing PPDU is sent based on a current channel access mechanism.
(3) After receiving the PPDU, another station (for example, a station #2) does not continue to unpack the PPDU after reading the RA, then respects a transmission opportunity (transmission opportunity, TXOP) of the station, and does not contend for a channel in this period of time.

In the foregoing solution, radar sensing is indicated by using RA=TA. However, when the sensing PPDU is sent and received by different devices, for example, in a bistatic sensing (bistatic sensing) or transmit/receive separation scenario, a receive end cannot determine that the PPDU is the sensing PPDU. In other words, for a receive end device in a communication system, the sensing PPDU and a non-sensing PPDU cannot be distinguished. In this way, the receive end cannot make corresponding adjustment to maximize sensing performance.

In view of the foregoing technical problem, an embodiment of this application provides an information indication method, to distinguish between a sensing PPDU and a non-sensing PPDU in a communication system, so that a receive end optimizes perception performance.

The technical solutions provided in this application are described in detail below with reference to the accompanying drawings. Embodiments of this application may be applied to a plurality of different scenarios, including the scenario shown in FIG. 1, but are not limited to the scenario.

FIG. 2 is a schematic flowchart of an information indication method 200 according to an embodiment of this application.

S210: A transmit end generates a PPDU, where the PPDU includes sensing indication information.

The sensing indication information indicates that the PPDU is a PPDU used for sensing measurement.

In other words, the sensing indication information indicates that the PPDU is not a PPDU used for communication.

In other words, the sensing indication information indicates that the PPDU carries a sensing signal, the sensing indication information indicates that a time period indicated by duration of the PPDU is used for sending the sensing signal, or the sensing indication information indicates that a TXOP protected/set by the PPDU is used for sending the sensing signal.

Specifically, at least one bit in the PPDU may be used as a sensing indication field, and the sensing indication field carries the sensing indication information. The sensing indication field may be a dedicated indication field, or may reuse a current indication field.

The PPDU is a DMG single carrier mode PPDU, an EDMG single carrier mode PPDU, or an EDMG orthogonal frequency division multiplexing mode PPDU.

It should be understood that a PPDU in the 802. 11 ad may be referred to as a DMG PPDU, and modes of the DMG PPDU include two types: a control mode (control mode) and a single carrier (single carrier, SC) mode. A PPDU in the 802.11ay may be referred to as an EDMG PPDU, and modes of the EDMG PPDU includes three types: a control mode (control mode), a single carrier mode (SC mode), and an orthogonal frequency division multiplexing (orthogonal frequency division multiplexing, OFDM) mode. The PPDU in this application is a PPDU in the SC mode in the 802.11ad, a PPDU in the SC mode in the 802. 11ay, or a PPDU in the OFDM mode in the 802.11ay, that is, a DMG SC mode PPDU, an EDMG SC mode PPDU, or an EDMG OFDM mode PPDU.

It should be further understood that, unless otherwise specified below in this application, the DMG PPDU is the DMG SC mode PPDU, and the EDMG PPDU is either the EDMG SC mode PPDU or the EDMG OFDM mode PPDU.

S220: The transmit end sends the PPDU, and correspondingly, a receive end receives the PPDU.

The transmit end sends the PPDU that includes the sensing indication information in S210, and the receive end receives the PPDU that includes the sensing indication information in S210.

S230: The receive end determines, based on the sensing indication information, that the PPDU is the PPDU used for sensing measurement.

Specifically, the receive end may parse the PPDU and obtain the sensing indication information in the PPDU, to determine that the PPDU is the PPDU used for sensing measurement.

According to the foregoing solution, the PPDU generated by the transmit end includes the sensing indication information, and the sensing indication information may indicate that the PPDU is the PPDU used for sensing measurement. The receive end may determine, based on the sensing indication information, that the PPDU is the PPDU used for sensing measurement. The receive end does not determine a PPDU that does not include sensing indication information as a sensing PPDU. In this manner, the sensing PPDU and a non-sensing PPDU in a communication system can be distinguished.

In addition, after it is determined that the PPDU is the PPDU used for sensing measurement, the receive end does not need to listen to a channel. This helps use communication resources more properly.

Optionally, further, after the receive end determines that the PPDU is the PPDU used for sensing measurement, the receive end may perform gain control on a subsequent automatic gain control (automatic gain control, AGC) part, to enhance sensing performance.

Optionally, further, after the receive end determines that the PPDU is the PPDU used for sensing measurement, the receive end may prepare a sensing result that needs to be fed back as early as possible.

In an implementation, the PPDU is the DMG SC mode PPDU, and a DMG header field of the DMG SC mode PPDU carries the sensing indication information.

It should be noted that the DMG SC mode PPDU includes a header field, and the header field may also be referred to as the DMG header field.

The DMG header field includes an EDMG PPDU indication field. Specifically, the EDMG PPDU indication field may be a B46 field in the DMG header field, and indicates whether the PPDU is the EDMG PPDU. In the DMG SC mode PPDU, when a value of the B46 field in the DMG header field is 0, it indicates that the PPDU is the DMG PPDU.

Based on the foregoing solution, when the receive end does not participate in any sensing, the receive end may determine that the PPDU is the sensing PPDU by reading the sensing indication information in the DMG header field. Further, the receive end may not continue to perform decoding. This helps reduce device power consumption.

Specifically, an additional PPDU (additional PPDU, A-PPDU) indication field and a training length (training length) indication field in the DMG header field carry the sensing indication information.

The DMG header field includes the A-PPDU indication field, and the A-PPDU indication field may indicate whether the PPDU is an A-PPDU. A meaning of the A-PPDU is that the PPDU is followed by another PPDU, and the following PPDU does not include a preamble part.

The DMG header field further includes the training length indication field, and the training length indication field indicates a length of a training (TRN) field included in the DMG SC mode PPDU.

In this application, the A-PPDU indication field and the training length indication field in the DMG header field may carry the sensing indication information.

In other words, a location of the sensing indication field is a location of the A-PPDU indication field and the training length indication field in the DMG header field. Alternatively, the A-PPDU indication field and the training length indication field in the DMG header field may jointly indicate whether the PPDU is the sensing PPDU.

Specifically, in the 802.11ad, the A-PPDU indication field is a B30 field in the DMG header, and the training length indication field is a B32 field to a B36 field in the DMG header.

It should be understood that, in this embodiment of this application, the "Bxx field" may also be referred to as a Bxx bit. For example, the B30 field indicates a B30 bit, that is, a bit in which B30 is located.

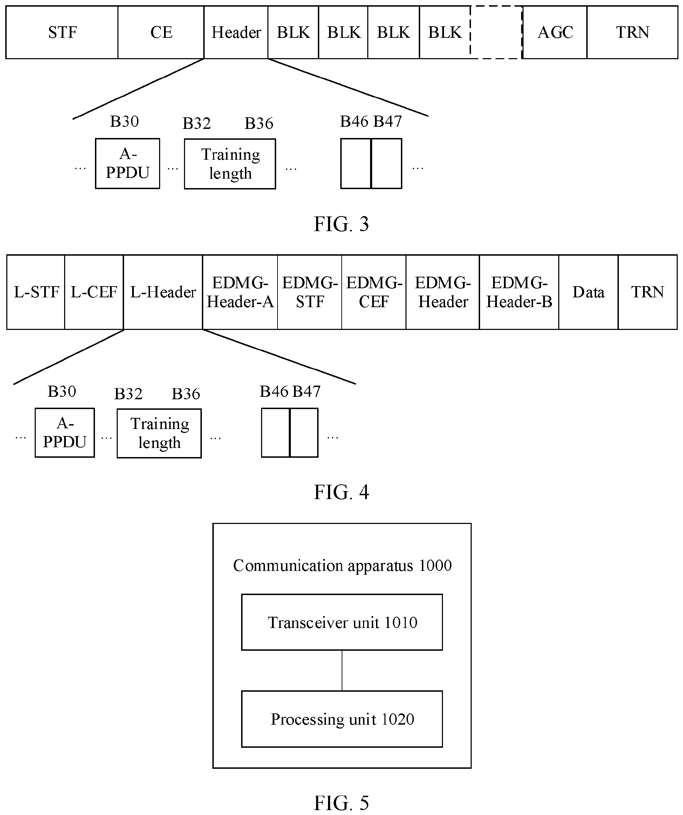

FIG. 3 is a schematic diagram of a format of a DMG SC mode PPDU. As shown in FIG. 3, the DMG SC mode PPDU includes a short training field (short training field, STF) field, a channel estimation (channel estimation, CE) field, a header field, at least one block (block, BLK), automatic gain control (automatic gain control, AGC), and a TRN field. The STF field and the CE field form a preamble (preamble) part. The header field is a DMG header field. A B30 field in the header field is an A-PPDU indication field. A B32 field to a B36 field in the header field are a training length indication field. The B32 field to the B36 field indicate a length of the TRN field. A B46 field in the DMG-header field is an EDMG PPDU indication field. In the format shown in FIG. 3, a value of the B46 field is 0. The B30 field and the B32 field to the B36 field may indicate the following information.
(1) If a value of the B30 field is 1, and values of the B32 field to the B36 field are 0, the PPDU is the A-PPDU. If the PPDU is the A-PPDU, a PPDU following the PPDU does not carry the STF field or the CE field.
(2) If the value of the B30 field is 0, and the values of the B32 field to the B36 field are 0, the PPDU is a non-A-PPDU that does not carry the TRN field.
(3) If the value of the B30 field is 0, and the values of the B32 field to the B36 field are not 0, the PPDU is the non-A-PPDU that carries the TRN field.
(4) If the value of the B30 field is 1, and the values of the B32 field to the B36 field are not 0, the PPDU is the sensing PPDU.

Specifically, the TRN field carried in the sensing PPDU may be used for sensing. When the value of B30 is 1 and the values of B32 to B36 are not 0, the receive end determines, based on the B30 field and the B32 field to the B36 field, that the DMG SC mode PPDU is the sensing PPDU. Further, the receive end may parse content of the TRN field, and implement sensing based on the content of the TRN field.

Therefore, in this embodiment of this application, a current indication field may be reused, and an indication of the sensing PPDU is implemented without introducing a new indication field, thereby helping save resources.

In addition, a case in which B30=1 and the training length indication field is not 0 does not occur in a DMG SC mode PPDU generated by a device that does not participate in sensing. Therefore, the DMG SC mode PPDU generated by the device that does not participate in sensing does not cause misreading of a DMG device that participates in sensing. However, the DMG SC mode PPDU generated by the device that participates in sensing has features that B30=1 and a training length is not 0. Therefore, when reading the B30 field and the B32 field to the B36 field, the DMG device that does not participate in sensing may also consider that an error occurs in the PPDU, that is, misreading of the DMG device that does not participate in sensing is not caused.

In other words, the solution in this application may be compatible with a current protocol, and have better scalability.

In addition, because the training length indication field may indicate a length of a training field, and the training field is used to implement sensing. The A-PPDU indication field and a description part (that is, the training length indication field) of the training field used for sensing are jointly used as the sensing indication field. When determining that the PPDU is the sensing PPDU, the receive end may further determine the length of the training field used for sensing, so that this solution is more compact and efficient.

In an implementation, the PPDU is an EDMG SC mode PPDU or an EDMG OFDM mode PPDU, the EDMG SC mode PPDU or the EDMG OFDM mode PPDU includes an L-header field, and the L-header field carries the sensing indication information.

It should be understood that the 802.11ay protocol is compatible with the 802.11ad protocol. For an EDMG PPDU, the L-header field may also be referred to as a non-EDMG header field of the EDMG PPDU, or referred to as a DMG header field of the EDMG PPDU.

The L-header field includes an EDMG PPDU indication field. Specifically, the EDMG PPDU indication field may be a B46 field in the L-header field, and indicates whether the PPDU is the EDMG PPDU. In the EDMG PPDU, when a value of the B46 field in the L-header field is 1, it indicates that the PPDU is the EDMG PPDU.

Based on the foregoing solution, when the receive end does not participate in any sensing, the receive end may determine that the PPDU is the sensing PPDU by reading the sensing indication information in the L-header field. Further, the receive end may not continue to perform decoding. This helps reduce device power consumption.

Specifically, for the EDMG SC mode PPDU or the EDMG OFDM mode PPDU, the L-header field also includes an A-PPDU indication field. In this application, the A-PPDU indication field in the L-header field may carry the sensing indication information.

In other words, a location of the sensing indication field is a location of the A-PPDU indication field in the L-header field. Alternatively, the A-PPDU indication field in the L-header field indicates whether the PPDU is the sensing PPDU.

Specifically, in the 802.11 ay protocol, the A-PPDU indication field in the L-header field is a B30 field in the L-header.

FIG. 4 is a schematic diagram of a format of an EDMG SC mode PPDU. As shown in FIG. 4, the EDMG SC mode PPDU includes an L-STF field, an L-channel estimation field (channel estimation field, CEF) field, an L-header field, an EDMG-header-A field, an EDMG-STF field, an EDMG-CEF field, an EDMG-header-B field, a data (data) field, and a TRN field. The L-STF field and the L-CEF field form a preamble part. The L-header field may also be referred to as a DMG header of the EDMG SC mode PPDU, a B30 field in the L-header field is an A-PPDU indication field, and a B46 field in the L-header field is an EDMG PPDU indication field. In the format shown in FIG. 4, a value of the B46 field is 1.

For a non-sensing EDMG SC mode PPDU, a value of the B30 field is 0. If the value of the B30 field is 1, the EDMG SC mode PPDU is the sensing PPDU.

It should be understood that, for the EDMG OFDM mode PPDU, a header format of the EDMG OFDM mode PPDU is the same as that of the EDMG SC mode PPDU. Therefore, a location of a sensing indication field of the EDMG OFDM mode PPDU is similar to that of the EDMG SC mode PPDU. Specifically, for the non-sensing EDMG OFDM mode PPDU, the value of the B30 field is 0. If the value of the B30 field is 1, the EDMG OFDM mode PPDU is the sensing PPDU.

Therefore, in this embodiment of this application, a current indication field may be reused, and an indication of the sensing PPDU is implemented without introducing a new indication field, thereby helping save resources.

In addition, for both the DMG PPDU and the EDMG PPDU, the A-PPDU indication field in the DMG header is used, so that the sensing indication fields in the DMG PPDU and the EDMG PPDU can be unified, thereby reducing implementation complexity.

Optionally, the EDMG SC mode PPDU or the EDMG OFDM mode PPDU may further include a training field. Specifically, as shown in FIG. 4, it should be understood that the training field of the sensing PPDU may be used for sensing. The training field includes two format types: a format of a training field used in the DMG PPDU and a format of a dedicated training field in the EDMG PPDU. Training fields in the two formats are referred to as a DMG training field and an EDMG training field respectively.

The training field included in the EDMG SC mode PPDU or the EDMG OFDM mode PPDU may be the DMG training field, or may be the EDMG training field. The EDMG single carrier mode PPDU or the EDMG orthogonal frequency division multiplexing mode PPDU includes an EDMG-header-A field, and a DMG training (DMG TRN) indication field in the EDMG-header-A field indicates that the PPDU includes a DMG training field or the PPDU includes an EDMG training field.

Specifically, in the 802. 11ay protocol, the DMG training indication field is a B 101 field in the EDMG-header-A field.

Therefore, in this embodiment of this application, a type of the training field included in the PPDU may be further indicated, so that the receive end may parse the training field based on the corresponding type, to perform sensing based on the training field.

In an example, the DMG training indication field indicates that the training field included in the EDMG SC mode PPDU or the EDMG OFDM mode PPDU is the DMG training field.

In this case, the training length indication field in the L-header field in the EDMG SC mode PPDU or the EDMG OFDM mode PPDU indicates a length of the DMG training field.

In other words, if the training field included in the EDMG PPDU is the DMG training field, the training length indication field in the L-header field may indicate the length of the DMG training field.

Specifically, in the 802.11ay protocol, the L-header field of the EDMG SC mode PPDU or the EDMG OFDM mode PPDU includes the training length indication field, and the training length indication field is a B32 field to a B36 field in the L-header.

Therefore, if the training field included in the EDMG PPDU is the DMG training field, in this embodiment of this application, the training length indication field in the L-header field may indicate the length of the DMG training field included in the PPDU, so that the receive end parses the training field, thereby further facilitating in implementing sensing.

In another example, the DMG training indication field indicates that the training field included in the EDMG SC mode PPDU or the EDMG OFDM mode PPDU is the EDMG training field.

In this case, a DMG training length (DMG TRN length) indication field in an EDMG-header-A field of the EDMG SC mode PPDU or the EDMG OFDM mode PPDU indicates a length of the EDMG training field, and a value of the training length indication field in the L-header field in the EDMG SC mode PPDU or the EDMG OFDM mode PPDU is 0.

Specifically, in the 802.11ay protocol, the EDMG-header-A field of the EDMG SC mode PPDU or the EDMG OFDM mode PPDU includes a DMG training length indication field, and the DMG training length indication field is a B64 field to a B71 field in the EDMG-header-A field.

In other words, if the training field included in the EDMG PPDU is the EDMG training field, a value of the training length indication field in the L-header field is 0. In this case, the training length indication field in the EDMG-header-A field of the EDMG PPDU may indicate a length of the EDMG training field in the PPDU.

Therefore, if the training field included in the EDMG PPDU is the EDMG training field, in this embodiment of this application, the training length indication field in the EDMG-header-A field may indicate the length of the EDMG training field included in the PPDU, so that the receive end parses the training field, thereby further facilitating in implementing sensing.

It should be understood that the foregoing relationships between the training length indication field and the training field are merely two examples. This is not limited in this application. For example, when the training field included in the EDMG PPDU is the DMG training field, a person skilled in the art may also design the training length indication field in the L-header field to 0, and use the training length indication field in the EDMG-header-A field of the EDMG PPDU to indicate the length of the DMG training field in the PPDU.

In an implementation, a B47 field in the DMG header field in the DMG SC mode PPDU carries the sensing indication information.

As shown in FIG. 3, the DMG header of the DMG SC mode PPDU further includes a reserved (reserved) bit, for example, the B47 field. The reserved bit may be used as the sensing indication field to indicate whether the DMG PPDU is the sensing PPDU.

Therefore, in this embodiment of this application, a dedicated bit may be used as the sensing indication field of the DMG PPDU, so that implementation is simpler.

In an implementation, a B47 field in the L-header field of the EDMG SC mode PPDU or the EDMG OFDM mode PPDU carries the sensing indication information.

As shown in FIG. 4, the L-header of the EDMG SC mode PPDU also includes a reserved bit, for example, the B47 field. The reserved bit may be used as the sensing indication field to indicate whether the EDMG SC mode PPDU is the sensing PPDU.

Similarly, a reserved bit of the EDMG OFDM mode PPDU, for example, the B47 field, may be used as the sensing indication field to indicate whether the EDMG OFDM mode PPDU is the sensing PPDU.

Therefore, in this embodiment of this application, a dedicated bit may be used as the sensing indication field of the EDMG PPDU, so that implementation is simpler.

In addition, for both the DMG PPDU and the EDMG PPDU, the reserved bit in the DMG header may be used, so that the sensing indication fields in the DMG PPDU and the EDMG PPDU can be unified, thereby reducing implementation complexity.

In an implementation, the EDMG SC mode PPDU or the EDMG OFDM mode PPDU includes the EDMG-header-A field, and the EDMG-header-A field carries the sensing indication information.

As shown in FIG. 4, the EDMG SC mode PPDU further includes an EDMG-header-A field. The following provides two implementations in which the EDMG-header-A field carries the sensing indication information.

Manner 1: Any reserved bit in the EDMG-header-A field carries the sensing indication information.

Specifically, any reserved bit in the EDMG-header-A, for example, any bit in a B102 field to a B111 field, may be used as the sensing indication field to indicate whether the EDMG SC mode PPDU is the sensing PPDU.

Similarly, a reserved bit of the EDMG OFDM mode PPDU, for example, any bit in a B102 field to a B111 field, may be used as the sensing indication field to indicate whether the EDMG OFDM mode PPDU is the sensing PPDU.

Therefore, in this embodiment of this application, a dedicated bit may be used as the sensing indication field of the EDMG PPDU, so that implementation is simpler.

In addition, for the EDMG PPDU, the reserved bit in the EDMG-header-A field may be further used, thereby increasing implementation diversity and flexibility of the solution.

Manner 2: An additional EDMG PPDU indication field (additional EDMG PPDU) and an EDMG training length indication field in the EDMG-header-A field carry the sensing indication information.

The EDMG-header-A field includes the additional EDMG PPDU indication field. The additional EDMG PPDU indication field may indicate whether the EDMG PPDU is an A-PPDU. A meaning of the A-PPDU is that the PPDU is followed by another PPDU, and the following PPDU does not include a preamble part.

The EDMG-header-A field further includes the EDMG training length indication field, and the EDMG training length indication field may indicate a length of an EDMG training field included in the DMG PPDU.

In this application, for the EDMG SC mode PPDU or the EDMG OFDM mode PPDU, the additional EDMG PPDU indication field and the EDMG training length indication field in the EDMG-header-A field may carry the sensing indication information.

In other words, a location of the sensing indication field is a location of the additional EDMG PPDU indication field and the EDMG training length indication field in the EDMG-header-A field. Alternatively, the additional EDMG PPDU indication field and the EDMG training length indication field in the EDMG-header-A field may jointly indicate whether the PPDU is the sensing PPDU.

Specifically, in the 802.11ay protocol, a B95 field in the EDMG-header-A is the additional EDMG PPDU indication field, and a B64 field to a B71 field in the EDMG-header-A are the EDMG training length indication field.

Therefore, in this embodiment of this application, a current indication field may be reused, and an indication of the sensing PPDU is implemented without introducing a new indication field, thereby helping save resources.

It should be understood that the foregoing two implementations in which the EDMG-header-A field carries the sensing indication information are merely examples. A specific location of the sensing indication information in the EDMG-header-A field is not limited in this application.

The foregoing describes the method embodiments in embodiments of this application, and the following describes corresponding apparatus embodiments. It should be understood that descriptions of the apparatus embodiments correspond to the descriptions of the method embodiments, and therefore for a part that is not described in detail, refer to the foregoing method embodiments.

FIG. 5 is a schematic diagram of a communication apparatus according to an embodiment of this application. As shown in FIG. 5, an apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement the procedures performed by the transmit end in the foregoing method embodiments. The processing unit 1020 is configured to perform processing-related operations of the transmit end in the foregoing method embodiments. The transceiver unit 1010 is configured to perform receiving/sending-related operations of the transmit end in the foregoing method embodiments.

For example, the processing unit 1020 is configured to generate a physical layer protocol data unit PPDU, where the PPDU includes sensing indication information, the sensing indication information indicates that the PPDU is a PPDU used for sensing measurement, and the PPDU is a directional multi-gigabit DMG single carrier mode PPDU, an enhanced directional multi-gigabit EDMG single carrier mode PPDU, or an EDMG orthogonal frequency division multiplexing mode PPDU.

The transceiver unit 1010 is configured to send the PPDU.

Optionally, the PPDU is the DMG single carrier mode PPDU, the DMG single carrier mode PPDU includes a DMG header field, and an additional PPDU indication field and a training length indication field in the DMG header field carry the sensing indication information.

Optionally, the additional PPDU indication field is a B30 field in the DMG header field, and the training length indication field is a B32 field to a B36 field in the DMG header field.

Optionally, the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and an additional PPDU indication field in the L-header field carries the sensing indication information.

Optionally, the additional PPDU indication field is a B30 field in the L-header field.

Optionally, the EDMG single carrier mode PPDU or the EDMG orthogonal frequency division multiplexing mode PPDU includes an EDMG-header-A field, and a DMG training indication field in the EDMG-header-A field indicates that the PPDU includes a DMG training field or the PPDU includes an EDMG training field.

Optionally, the DMG training indication field is a B 101 field in the EDMG-header-A field.

Optionally, the EDMG single carrier mode PPDU or the EDMG orthogonal frequency division multiplexing mode PPDU includes the DMG training field, and a training length indication field in the L-header field indicates a length of the DMG training field.

Optionally, the training length indication field is a B32 field to a B36 field in the L-header field.

Optionally, the EDMG single carrier mode PPDU or the EDMG orthogonal frequency division multiplexing mode PPDU includes the EDMG training field, and an EDMG training length indication field in the EDMG-header-A field indicates a length of the EDMG training field.

Optionally, the EDMG training length indication field is a B64 field to a B71 field in the EDMG-header-A field.

Optionally, the PPDU is the DMG single carrier mode PPDU, the DMG single carrier mode PPDU includes a DMG header field, and a B47 field in the DMG header field carries the sensing indication information; the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and a B47 field in the L-header field carries the sensing indication information; or the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an EDMG-header-A field, and the EDMG-header-A field carries the sensing indication information.

Optionally, the PPDU is the EDMG single carrier mode PPDU or the EDMG orthogonal frequency division multiplexing mode PPDU, and an additional EDMG PPDU indication field and an EDMG training length indication field in the EDMG-header-A field carry the sensing indication information.

Optionally, the additional EDMG PPDU indication field is a B95 field in the EDMG-header-A field, and the EDMG training length indication field is a B64 field to a B71 field in the EDMG-header-A field.

In still another possible design, the apparatus 1000 may implement the procedures performed by the receive end in the foregoing method embodiments. The transceiver unit 1010 is configured to perform receiving/sending-related operations of the receive end in the foregoing method embodiments, and the processing unit 1020 is configured to perform processing-related operations of the receive end in the foregoing method embodiments.

For example, the transceiver unit 1010 is configured to receive a physical layer protocol data unit PPDU, where the PPDU includes sensing indication information, the sensing indication information indicates that the PPDU is a PPDU used for sensing measurement, and the PPDU is a DMG single carrier mode PPDU, an EDMG single carrier mode PPDU, or an EDMG orthogonal frequency division multiplexing mode PPDU.

The processing unit 1020 is configured to determine, based on the sensing indication information, that the PPDU is the PPDU used for sensing measurement.

Optionally, the PPDU is the DMG single carrier mode PPDU, the DMG single carrier mode PPDU includes a DMG header field, and an additional PPDU indication field and a training length indication field in the DMG header field carry the sensing indication information.

Optionally, the additional PPDU indication field is a B30 field in the DMG header field, and the training length indication field is a B32 field to a B36 field in the DMG header field.

Optionally, the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and an additional PPDU indication field in the L-header field carries the sensing indication information.

Optionally, the additional PPDU indication field is a B30 field in the L-header field.

Optionally, the EDMG single carrier mode PPDU or the EDMG orthogonal frequency division multiplexing mode PPDU includes an EDMG-header-A field, and a DMG training indication field in the EDMG-header-A field indicates that the PPDU includes a DMG training field or the PPDU includes an EDMG training field.

Optionally, the DMG training indication field is a B 101 field in the EDMG-header-A field.

Optionally, the EDMG single carrier mode PPDU or the EDMG orthogonal frequency division multiplexing mode PPDU includes the DMG training field, and a training length indication field in the L-header field indicates a length of the DMG training field.

Optionally, the training length indication field is a B32 field to a B36 field in the L-header field.

Optionally, the EDMG single carrier mode PPDU or the EDMG orthogonal frequency division multiplexing mode PPDU includes the EDMG training field, and an EDMG training length indication field in the EDMG-header-A field indicates a length of the EDMG training field.

Optionally, the EDMG training length indication field is a B64 field to a B71 field in the EDMG-header-A field.

Optionally, the PPDU is the DMG single carrier mode PPDU, the DMG single carrier mode PPDU includes a DMG header field, and a B47 field in the DMG header field carries the sensing indication information; the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an L-header field, and a B47 field in the L-header field carries the sensing indication information; or the PPDU is the EDMG single carrier mode PPDU or the EDMG orthogonal frequency division multiplexing mode PPDU, the EDMG single carrier mode PPDU or the EDMG orthogonal frequency division multiplexing mode PPDU includes an EDMG-header-A field, and the EDMG-header-A field carries the sensing indication information.

Optionally, the PPDU is the EDMG single carrier mode PPDU or the EDMG orthogonal frequency division multiplexing mode PPDU, and an additional EDMG PPDU indication field and an EDMG training length indication field in the EDMG-header-A field carry the sensing indication information.

Optionally, the additional EDMG PPDU indication field is a B95 field in the EDMG-header-A field, and the EDMG training length indication field is a B64 field to a B71 field in the EDMG-header-A field.

It should be understood that the apparatus 1000 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the transmit end in the foregoing embodiments, and may be configured to perform the procedures corresponding to the transmit end in the foregoing method embodiments. Alternatively, the apparatus 1000 may be specifically the receive end in the foregoing embodiments, and may be configured to perform the procedures corresponding to the receive end in the foregoing method embodiments. To avoid repetition, details are not described herein again.

The apparatus 1000 has a function of implementing the corresponding steps performed by the transmit end in the foregoing method, or the apparatus 1000 has a function of implementing the corresponding steps performed by the receive end in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, the sending unit in the transceiver unit may be replaced by a transmitter, and the receiving unit in the transceiver unit may be replaced by a receiver). Another unit, such as a processing unit, may be replaced by a processor to separately perform a sending and receiving operation and a related processing operation in each method embodiment.

In addition, the transceiver unit may alternatively be a transceiver circuit (for example, may include a receive circuit and a sending circuit), and the processing unit may be a processing circuit. In this embodiment of this application, the apparatus in FIG. 5 may be the receive end or the transmit end in the foregoing embodiments, or may be a chip or a chip system, for example, a system on chip (system on chip, SoC). The transceiver unit may be an input/output circuit or a communication interface. The processing unit is a processor a microprocessor or an integrated circuit integrated on the chip. This is not limited herein.

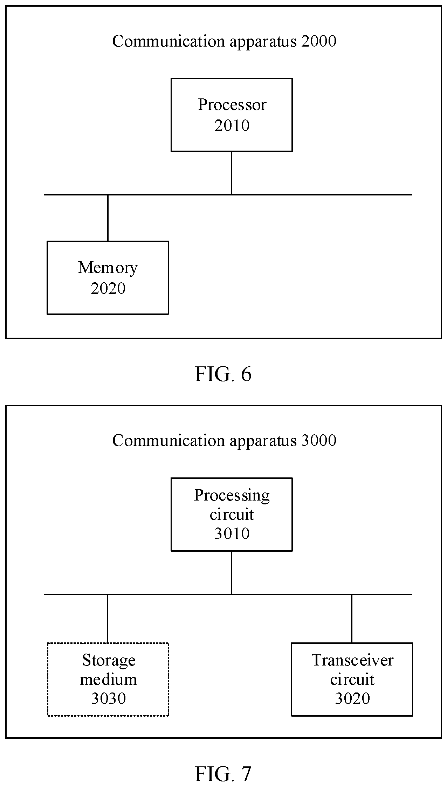

FIG. 6 shows a communication apparatus 2000 according to an embodiment of this application. The apparatus 2000 includes a processor 2010 and a memory 2020. The memory 2020 is configured to store instructions. The processor 2010 may invoke the instructions stored in the memory 2020, to perform a procedure corresponding to the transmit end or the receive end in the foregoing method embodiments.

Specifically, in a possible implementation, the memory 2020 is configured to store instructions, and the processor 2010 may invoke the instructions stored in the memory 2020, to perform the procedure corresponding to the transmit end in the foregoing method embodiments.

Specifically, in another possible implementation, the memory 2020 is configured to store instructions, and the processor 2010 may invoke the instructions stored in the memory 2020, to perform the procedure corresponding to the receive end in the foregoing method embodiments.

It should be understood that the apparatus 2000 may be specifically the transmit end or the receive end in the foregoing embodiments, or may be a chip or a chip system used at the transmit end or the receive end. Specifically, the apparatus 2000 may be configured to perform the procedures corresponding to the transmit end or the receive end in the foregoing method embodiments.

Optionally, the memory 2020 may include a read-only memory and a random access memory, and provide instructions and data for the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the procedures of the method embodiment corresponding to the transmit end or the receive end.

In an implementation process, the steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 7 shows a communication apparatus 3000 according to an embodiment of this application. The apparatus 3000 includes a processing circuit 3010 and a transceiver circuit 3020. The processing circuit 3010 and the transceiver circuit 3020 communicate with each other through an internal connection path. The processing circuit 3010 is configured to execute instructions, to control the transceiver circuit 3020 to send a signal and/or receive a signal.

Optionally, the apparatus 3000 may further include a storage medium 3030. The storage medium 3030 communicates with the processing circuit 3010 and the transceiver circuit 3020 through an internal connection path. The storage medium 3030 is configured to store instructions, and the processing circuit 3010 may execute the instructions stored in the storage medium 3030.

In a possible implementation, the apparatus 3000 is configured to implement procedures corresponding to the transmit end in the foregoing method embodiments.

In another possible implementation, the apparatus 3000 is configured to implement procedures corresponding to the receive end in the foregoing method embodiments.

According to the methods provided in embodiments of this application, this application further provides a computer program product. The computer program product includes computer program code. When the computer program code is run on a computer, the computer is enabled to perform the method in the embodiment shown in FIG. 2.

According to the methods provided in embodiments of this application, this application further provides a computer-readable medium. The computer-readable medium stores program code. When the program code is run on a computer, the computer is enabled to perform the method in the embodiment shown in FIG. 2.

According to the methods provided in embodiments of this application, this application further provides a system, including the foregoing one or more stations and the foregoing one or more access points.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objective of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information indication method, comprising:
generating a physical layer protocol data unit (physical protocol data unit, PPDU), wherein the PPDU comprises sensing indication information, the sensing indication information indicates that the PPDU is a PPDU used for sensing measurement, and the PPDU is a directional multi-gigabit (directional multi-gigabit, DMG) single carrier (single carrier, SC) mode PPDU, an enhanced directional multi-gigabit (enhanced directional multi-gigabit, EDMG) single carrier mode PPDU, or an EDMG orthogonal frequency division multiplexing (orthogonal frequency division multiplexing, OFDM) mode PPDU; and
sending the PPDU.

2. An information indication method, comprising:
receiving a PPDU, wherein the PPDU comprises sensing indication information, the sensing indication information indicates that the PPDU is a PPDU used for sensing measurement, and the PPDU is a DMG single carrier mode PPDU, an EDMG single carrier mode PPDU, or an EDMG orthogonal frequency division multiplexing mode PPDU; and
determining, based on the sensing indication information, that the PPDU is the PPDU used for sensing measurement.

3. The method according to claim 1 or 2, wherein the PPDU is the DMG single carrier mode PPDU, the DMG single carrier mode PPDU comprises a DMG header field, and an additional PPDU indication field and a training length indication field in the DMG header (header) field carry the sensing indication information.

4. The method according to claim 3, wherein the additional PPDU indication field is a B30 field in the DMG header field, and the training length indication field is a B32 field to a B36 field in the DMG header field.

5. The method according to claim 1 or 2, wherein the PPDU is the EDMG single carrier mode PPDU or the EDMG orthogonal frequency division multiplexing mode PPDU, the EDMG single carrier mode PPDU or the EDMG orthogonal frequency division multiplexing mode PPDU comprises an L-header field, and an additional PPDU indication field in the L-header field carries the sensing indication information.

6. The method according to claim 5, wherein the additional PPDU indication field is a B30 field in the L-header field.

7. The method according to claim 5 or 6, wherein the EDMG single carrier mode PPDU or the EDMG orthogonal frequency division multiplexing mode PPDU comprises an EDMG-header-A field, and a DMG training indication field in the EDMG-header-A field indicates that the PPDU comprises a DMG training field or the PPDU comprises an EDMG training field.

8. The method according to claim 7, wherein the EDMG single carrier mode PPDU or the EDMG orthogonal frequency division multiplexing mode PPDU comprises the DMG training field, and a training length indication field in the L-header field indicates a length of the DMG training field.

9. The method according to claim 8, wherein the training length indication field is a B32 field to a B36 field in the L-header field.

10. The method according to claim 7, wherein the EDMG single carrier mode PPDU or the EDMG orthogonal frequency division multiplexing mode PPDU comprises the EDMG training field, and an EDMG training length indication field in the EDMG-header-A field indicates a length of the EDMG training field.

11. The method according to claim 10, wherein the EDMG training length indication field is a B64 field to a B71 field in the EDMG-header-A field.

12. The method according to claim 1 or 2, wherein the PPDU is the DMG single carrier mode PPDU, the DMG single carrier mode PPDU comprises a DMG header field, and a B47 field in the DMG header field carries the sensing indication information;
the PPDU is the EDMG single carrier mode PPDU or the EDMG orthogonal frequency division multiplexing mode PPDU, the EDMG single carrier mode PPDU or the EDMG orthogonal frequency division multiplexing mode PPDU comprises an L-header field, and a B47 field in the L-header field carries the sensing indication information; or
the PPDU is the EDMG single carrier mode PPDU or the EDMG orthogonal frequency division multiplexing mode PPDU, the EDMG single carrier mode PPDU or the EDMG orthogonal frequency division multiplexing mode PPDU comprises an EDMG-header-A field, and the EDMG-header-A field carries the sensing indication information.

13. The method according to claim 12, wherein the PPDU is the EDMG single carrier mode PPDU or the EDMG orthogonal frequency division multiplexing mode PPDU, and an additional EDMG PPDU indication field and an EDMG training length indication field in the EDMG-header-A field carry the sensing indication information.

14. The method according to claim 13, wherein the additional EDMG PPDU indication field is a B95 field in the EDMG-header-A field, and the EDMG training length indication field is a B64 field to a B71 field in the EDMG-header-A field.

15. A communication apparatus, comprising:
a processing unit, configured to generate a PPDU, wherein the PPDU comprises sensing indication information, the sensing indication information indicates that the PPDU is a PPDU used for sensing measurement, and the PPDU is a DMG single carrier mode PPDU, an EDMG single carrier mode PPDU, or an EDMG orthogonal frequency division multiplexing mode PPDU; and
a transceiver unit, configured to send the PPDU.

16. A communication apparatus, comprising:
a transceiver unit, configured to receive a PPDU, wherein the PPDU comprises sensing indication information, the sensing indication information indicates that the PPDU is a PPDU used for sensing measurement, and the PPDU is a DMG single carrier mode PPDU, an EDMG single carrier mode PPDU, or an EDMG orthogonal frequency division multiplexing mode PPDU; and
a processing unit, configured to determine, based on the sensing indication information, that the PPDU is the PPDU used for sensing measurement.

17. The apparatus according to claim 15 or 16, wherein the PPDU is the DMG single carrier mode PPDU, the DMG single carrier mode PPDU comprises a DMG header field, and an additional PPDU indication field and a training length indication field in the DMG header field carry the sensing indication information.

18. The apparatus according to claim 17, wherein the additional PPDU indication field is a B30 field in the DMG header field, and the training length indication field is a B32 field to a B36 field in the DMG header field.

19. The apparatus according to claim 15 or 16, wherein the PPDU is the EDMG single carrier mode PPDU or the EDMG orthogonal frequency division multiplexing mode PPDU, the EDMG single carrier mode PPDU or the EDMG orthogonal frequency division multiplexing mode PPDU comprises an L-header field, and an additional PPDU indication field in the L-header field carries the sensing indication information.

20. The apparatus according to claim 19, wherein the additional PPDU indication field is a B30 field in the L-header field.

21. The apparatus according to claim 19 or 20, wherein the EDMG single carrier mode PPDU or the EDMG orthogonal frequency division multiplexing mode PPDU comprises an EDMG-header-A field, and a DMG training indication field in the EDMG-header-A field indicates that the PPDU comprises a DMG training field or the PPDU comprises an EDMG training field.

22. The apparatus according to claim 21, wherein the EDMG single carrier mode PPDU or the EDMG orthogonal frequency division multiplexing mode PPDU comprises the DMG training field, and a training length indication field in the L-header field indicates a length of the DMG training field.

23. The apparatus according to claim 22, wherein the training length indication field is a B32 field to a B36 field in the L-header field.

24. The apparatus according to claim 21, wherein the EDMG single carrier mode PPDU or the EDMG orthogonal frequency division multiplexing mode PPDU comprises the EDMG training field, and an EDMG training length indication field in the EDMG-header-A field indicates a length of the EDMG training field.

25. The apparatus according to claim 24, wherein the EDMG training length indication field is a B64 field to a B71 field in the EDMG-header-A field.

26. The apparatus according to claim 15 or 16, wherein the PPDU is the DMG single carrier mode PPDU, the DMG single carrier mode PPDU comprises a DMG header field, and a B47 field in the DMG header field carries the sensing indication information;
the PPDU is the EDMG single carrier mode PPDU or the EDMG orthogonal frequency division multiplexing mode PPDU, the EDMG single carrier mode PPDU or the EDMG orthogonal frequency division multiplexing mode PPDU comprises an L-header field, and a B47 field in the L-header field carries the sensing indication information; or
the PPDU is the EDMG single carrier mode PPDU or the EDMG orthogonal frequency division multiplexing mode PPDU, the EDMG single carrier mode PPDU or the EDMG orthogonal frequency division multiplexing mode PPDU comprises an EDMG-header-A field, and the EDMG-header-A field carries the sensing indication information.

27. The apparatus according to claim 26, wherein the PPDU is the EDMG single carrier mode PPDU or the EDMG orthogonal frequency division multiplexing mode PPDU, and an additional EDMG PPDU indication field and an EDMG training length indication field in the EDMG-header-A field carry the sensing indication information.

28. The apparatus according to claim 27, wherein the additional EDMG PPDU indication field is a B95 field in the EDMG-header-A field, and the EDMG training length indication field is a B64 field to a B71 field in the EDMG-header-A field.

29. A communication apparatus, comprising:
a processor, wherein the processor is coupled to a memory; and
the processor is configured to execute a computer program or instructions stored in the memory, to enable the apparatus to perform the method according to any one of claims 1 to 14.

30. A chip, comprising: a processing circuit, configured to: invoke a computer program or instructions from a storage medium and run the computer program or the instructions, to perform the method according to any one of claims 1 to 14.

31. A computer-readable storage medium, comprising a computer program or instructions, wherein when the computer program or instructions are run on a computer, the computer is enabled to perform the method according to any one of claims 1 to 14.

32. A computer program product, comprising instructions, wherein when the instructions are run on a computer, the computer is enabled to perform the method according to any one of claims 1 to 14.
